(19) Europäisches Patentamt
European Patent Office
Office européen des brevets

(11) **EP 4 464 874 A1**

(12) **EUROPEAN PATENT APPLICATION**

(43) Date of publication:
**20.11.2024 Bulletin 2024/47**

(21) Application number: **24174745.0**

(22) Date of filing: **08.05.2024**

(51) International Patent Classification (IPC):
**F01D 21/02** *(2006.01)*     **F01D 21/00** *(2006.01)*

(52) Cooperative Patent Classification (CPC):
**F01D 21/02; F01D 21/003;** F05D 2270/335

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.05.2023 GB 202307260**

(71) Applicant: **Rolls-Royce Deutschland Ltd & Co KG 15827 Blankenfelde-Mahlow (DE)**

(72) Inventor: **CALDERON, Jorge 15827 Blankenfelde-Mahlow (DE)**

(54) **SHAFT FAILURE DETECTION APPARATUS AND METHOD OF DETECTING A SHAFT FAILURE**

(57)     A shaft failure detection apparatus (10) for a rotating shaft (2) of a gas turbine engine (1), wherein the rotating shaft (2) transmits a torque ($\tau$) and has a rotational speed (n) and wherein an electric generator (3) is connected to the rotating shaft (2). The shaft failure detection apparatus (10) comprises measuring means (11) configured to measure at least one parameter (U, I, f) of the electric generator (3) and/or of a power electronics device (4) coupled to the electric generator (3), wherein the at least one parameter (U, I, f) is dependent on the shaft torque, first determining means (12) configured to determine a value ($\tau_R$) representative of the shaft torque based on the measured at least one parameter (U, I, f), and second determining means (13) configured to determine a shaft failure, wherein the second determining means (13) evaluate a change in the value ($\tau_R$) representative of the shaft torque determined by the first determining means (12).

Fig. 3

**Description**

**Field** of the disclosure

The present disclosure relates to a shaft failure detection apparatus for a rotating shaft of a gas turbine engine and to a method of detecting a shaft failure in a gas turbine engine, wherein an electric generator is connected to the rotating shaft.

Background

It is known to power an electric generator by connecting it to the shaft of a gas turbine engine. Such an arrangement is also referred to as a turbo generator. In case of a shaft failure such as a shaft break, the gas turbine engine may be severely mechanically damaged due to a sudden removal of the load which leads to turbine overspeed, potentially resulting in turbine burst and the ejection of high energy material. Especially in aircraft engines with high safety requirements, the consequences of such damage may be serious. Shaft failure events thus need to be protected, and thus detected.

To detect a shaft failure of the rotating shaft of a gas turbine engine, methods are known in which speed sensors are located at the front and at the rear of the shaft to measure the speed of the shaft at its front and at its rear. To detect a shaft failure, the front and rear speed measurements are compared. Such methods, however, require two speed sensors which entails costs and complexity. Also, it may be challenging to locate speed sensors at the front and rear of a shaft.

There is a need for a shaft failure detection apparatus and a method that detects a shaft failure of a gas turbine engine in an efficient manner and addresses at least some of the aforementioned problems, or at least provides a useful alternative to known shaft failure detection apparatus and methods for detecting shaft failures in gas turbine engines.

**Summary of the disclosure**

According to a first aspect, there is provided a shaft failure detection apparatus for a rotating shaft of a gas turbine engine. The rotating shaft transmits a torque and has a rotational speed, and an electric generator is connected to the rotating shaft. The shaft failure detection apparatus comprises measuring means configured to measure at least one parameter of the electric generator and/or of a power electronics device coupled to the electric generator, wherein the at least one parameter is dependent on the shaft torque. The apparatus further comprises first determining means configured to determine a value representative of the shaft torque based on the measured at least one parameter, and second determining means configured to determine a shaft failure, wherein the second determining means evaluate a change in the value representative of the shaft torque determined by the first determining means.

The shaft failure detection apparatus is based on the idea to measure certain parameters of the electric generator and/or of a power electronics device coupled to the electric generator, to determine a value representative of the torque of the rotating shaft based on the measured parameters, and to determine a shaft failure by evaluating a change in the value representative of the shaft torque. Accordingly, a shaft failure of the gas turbine engine is detected by measuring and evaluating parameters of an electric generator connected to the shaft of the gas turbine engine or an associated power electronics device such as a rectifier or a frequency converter.

It is pointed out that the shaft failure detection apparatus does not necessarily determine the actual value of the torque of the rotating shaft, but a value representative of the shaft torque. Such value may be the actual value of the shaft torque, but it may also be a value that differs, e.g., by a constant from the actual shaft torque and/or a value that differs by a factor from the actual shaft torque. The reason for considering a value representative of the shaft torque lies in that the present invention evaluates a change in the shaft torque to determine a shaft failure for which it is not necessary to know the absolute value of the shaft torque.

It is further pointed out that the term "parameter" is used in the present disclosure to identify a physical property such as current, voltage and the frequency of the electric current. In a mathematical formulation, the parameters represent variables.

In some embodiments, the second determining means determine a shaft failure if the value representative of the shaft torque changes more than a predetermined threshold value. Accordingly, a shaft failure is identified if the shaft torque moves out of a predetermined range. Additionally or alternatively, the second determining means determine a shaft failure if the value representative of the shaft torque changes with a rate higher than a predetermined rate. In such embodiments, the rate of change of the shaft torque is evaluated. For example, in case of a sudden loss of torque a shaft failure is identified.

In some embodiments, the measuring means are configured to measure as parameter of the electric generator and/or of the power electronics device at least one of an electric current of the electric generator and/or of the power electronics device, a voltage of the electric generator and/or of the power electronics device, and the frequency of the electric current. Based on such variables the value representative of the shaft torque is determined.

For example, it may be provided that the measuring means are configured to measure at least two parameters, wherein the at least two parameters comprise a voltage output by the electric generator and/or the power electronics device and a current output by the electric generator and/or the power electronics device. The first determining means are configured to determine the value representative of the shaft torque based on at least the measured voltage and current.

In some embodiments, the measuring means are configured to also measure the frequency of the electric current (which corresponds to the generator speed), wherein the first determining means are configured to determine the value representative of the shaft torque also based on the frequency of the electric current.

In some embodiments, the first determining means are configured to determine the value representative of the shaft torque by calculating:

$$\tau_R = (I \cdot V) / \omega_I$$

wherein:

$\tau_R$     is the value representative of the shaft torque;
I     is the value of the current (current intensity);
V     is the value of the voltage; and
$\omega_I$     is the circular frequency $2\pi f$, when f is the frequency of the electric current.

Accordingly, the value representative of the shaft torque can be calculated in a simple manner when measuring the current, the voltage and the circular frequency. The measured current and voltage may be the DC current and voltage at the output of a power electronics device coupled to the electric generator. If an AC current and voltage are considered, the root-mean-square value may be considered (about 70.7 % of the peak amplitude).

In some embodiments, the value representative of the shaft torque represents the electrical torque of the electric generator. In this respect, it is to be noted that, generally, the torque of the rotating shaft (the shaft torque) is equal to the sum of an electrical torque, a magnetic losses torque and a mechanical losses torque, wherein the magnetic losses torque and the mechanical losses torque are constants which depend on the application. For example, the mechanical losses torque may be influenced by losses caused by the bearings. While in principle it is possible to determine the values of the magnetic losses torque and the mechanical losses torque, there is no advantage associated with it as a shaft failure can be detected by evaluating a change in the torque for which it is not necessary to know the absolute torque values. When not considering the magnetic losses torque and the mechanical losses torque (by treating them as an unknown constant), the torque considered in the context of the present invention is the torque of the electric generator which is converted into electric power.

In some embodiments, the second determining means are configured to determine a shaft failure by further evaluating at least one parameter of the gas turbine engine and by determining if the assumption of a shaft failure (as indicated by the change in the value representative of the shaft torque) is in logical consistency with at least one parameter of the gas turbine engine or a change of such parameter. This aspect of the invention is based on the idea to increase the reliability of the detection of a shaft failure by considering an additional leg of detection which is the evaluation of one or several parameters of the gas turbine engine and determining a logical consistency such as a correlation. If there is logical consistency (assuming a shaft failure) between the change in the value representative of the shaft torque and the at least one parameter of the gas turbine engine (or its change), this is indicative of a shaft failure. Using such evaluations in combination with the evaluation of a change in the value representative of the shaft torque, a robust detection method for a shaft failure is provided for.

In some embodiments, the second determining means determine a shaft failure only if the mentioned logical consistency does exist.

In some embodiments, the second determining means are configured to evaluate as parameter of the gas turbine engine at least one of a compressor outlet pressure (P30), a compressor outlet temperature (T30), a turbine cooling air front temperature (TCAF), a turbine cooling air rear temperature (TCAR), a fuel flow into a combustor, the rotational speed of a high pressure spool, and a twisting of the rotating shaft. The respective parameter or a change of the respective parameter is checked for logical consistency with the change in the value representative of the torque shaft. For example, if the turbine speed increases, this is also indicative of a shaft failure. If at the same time the value representative of the torque shaft declines, two indicia are present for a shaft failure.

In some embodiments, the second determining means are configured to determine a shaft failure if the rate of change of the value representative of the shaft torque does not correlate with the at the least one parameter of the gas turbine engine or a change of such parameter. Accordingly, to decide if logical consistency exists, a lack of correlation is considered (wherein the correlation is determined under the assumption of normal operation). For example, when the value representative of the shaft torque does not correlate with the measured gas turbine variable expected under normal operation, this is an indication of a shaft failure.

Determining of a logical consistency such as a correlation may be implemented by logical circuits. For example, it may be compared specific ranges for a change of the value representative of the shaft torque with specific ranges for a change of at least one parameter of the gas turbine engine.

In some embodiments, the apparatus further comprises means to create a command to shut off the fuel supply of the gas turbine engine if a shaft failure is detected. Accordingly, a shaft failure will be accommodated by commanding a rapid fuel shut off.

In a second aspect, a method of detecting a shaft failure of a rotating shaft of a gas turbine engine is provided, wherein the rotating shaft transmits a shaft torque and has a rotational speed and wherein an electric generator is connected to the rotating shaft. The method comprises the steps of: measuring at least one parameter of the electric generator and/or of a power electronics device coupled to the electric generator, wherein the at least one parameter is dependent on the shaft torque; determining a value representative of the shaft torque based on the measured at least one parameter; and determining a shaft failure by evaluating a change in the determined value representative of the shaft torque.

Embodiments of the method of the second aspect correspond to embodiments of the apparatus of the first aspect. For example, a shaft failure may be determined if the value representative of the shaft torque changes more than a predetermined threshold value and/or changes with a rate higher than a predetermined rate.

In some embodiments of the method, as parameter of the electric generator and/or of the power electronics device at least one of electric current of the electric generator and/or of the power electronics device, voltage of the electric generator and/or of the power electronics device, and rotational speed of the rotating shaft are measured.

The method may provide for further evaluating at least one parameter of the gas turbine engine, wherein it is determined if the assumption of a shaft failure is in logical consistency with at the least one parameter of the gas turbine engine or a change of such parameter, and wherein a shaft failure is determined only if such logical consistency exists.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

**Brief description of the disclosure**

The invention will be explained in more detail on the basis of exemplary embodiments with reference to the accompanying drawings in which:

FIG. 1 is a schematic view of a turbo generator comprising a gas turbine engine and an electric generator connected to a shaft of the gas turbine engine;
FIG. 2 schematically depicts the development of the shaft torque and the development of the shaft speed over time in case of a shaft failure;
FIG. 3 is an embodiment of a shaft failure detection apparatus;
FIG. 4 depicts schematically the measurement of a current and of a voltage in a shaft failure detection apparatus;
FIG. 5 is an example logical circuit for triggering the shut-down of fuel for a gas turbine engine in case of a shaft failure;
FIG. 6 is a further example logical circuit for triggering the shut-down of fuel for a gas turbine engine in case of a shaft failure;
FIG. 7 schematically depicts shaft twist of the rotating shaft of a gas turbine engine in dependency on shaft torque; and
FIG. 8 is a flowchart of a method for detecting a shaft failure.

The following table lists the reference numerals used in the drawings with the features to which they refer:

| No. | Feature | FIG. |
|---|---|---|
| 1 | Gas turbine engine | 1 |
| 2 | Rotating shaft | 1 2 |
| 3 | Electric generator | 1 3 |
| 4 | Rectifier | 13 |
| 5 | Voltage regulator | 3 |
| 6 | Battery | 3 4 |

(continued)

| No. | Feature | FIG. |
|---|---|---|
| 10 | Shaft failure detection apparatus | 3 |
| 11 | Measuring means | 3 |
| 12 | First determining means | 3 |
| 13 | Second determining means | 3 |
| 15 | Line | 3 |
| 16 | Line | 3 |
| 21 | Shaft | 1 |
| 25 | Coupling | 1 |
| 30 | Electric generating unit | 3 4 |
| 41 | Section of curve | 2 |
| 42 | Section of curve | 2 |
| 43 | Section of curve | 2 |
| 44 | Section of curve | 2 |
| 45 | Section of curve | 2 |
| 46 | Point | 2 |
| 47 | Section of curve | 2 |
| 48 | Section of curve | 2 |
| 71 | Shaft failure point | 7 |
| 72 | Range i.e. normal working region | 7 |
| 81 | Step | 8 |
| 82 | Step | 8 |
| 83 | Step | 8 |
| 84 | Step | 8 |
| 111 | Current meter | 4 |
| 112 | Voltmeter | 4 |
| f | Frequency | 3 |
| I | Current | 3 |
| $I_A$ | Alternating current | 3 |
| $I_F$ | Control signal | 3 |
| $I_O$ | Current | 3 |
| n | Rotational speed | 12 |
| P30 | Outlet pressure | 3 |
| S | Command | 3 |
| ST | Twisting value | 37 |
| t | Time | 2 |
| T | Shaft torque | 1 2 |
| $\tau_R$ | Calculated torque | 3 |
| T30 | Outlet temperature | 3 |
| V | Voltage | 3 |

(continued)

| No. | Feature | FIG. |
|-----|---------|------|
| $V_A$ | Alternating voltage | 3 |
| $V_O$ | Voltage output | 3 |
| $V_\tau$ | Target voltage | 3 |
| X | Shaft failure event | 2 |

**Detailed description**

Aspects and embodiments of the present disclosure will now be discussed with reference to the accompanying figures. Further aspects and embodiments will be apparent to those skilled in the art.

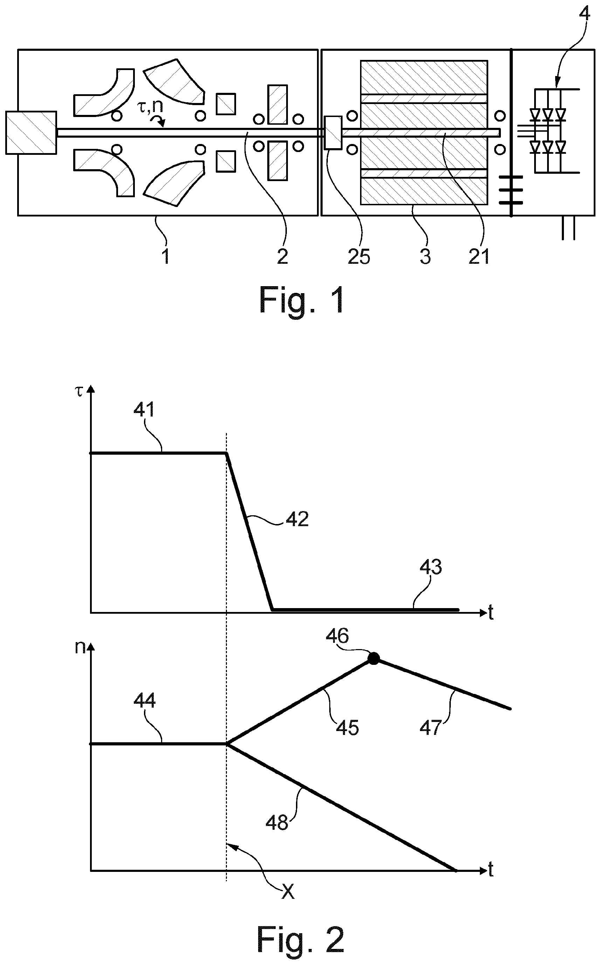

**FIG. 1** shows the basic structure of a turbo generator which comprises a gas turbine engine 1, a rotating shaft 2, an electric generator 3, and a rectifier 4. The gas turbine engine 10 comprises a compressor and a turbine as known to the skilled person. The gas turbine engine 1 drives the electric generator 3 via the rotating shaft 2. The rectifier 4 converts an alternating current generated by the electric generator 3 into a direct current which is stored, for example, in one or more batteries.

The rotating shaft 2 transmits a torque $\tau$ generated by the gas turbine engine 1 and rotates with a rotational speed n. The torque transmitted by the rotating shaft 2 is referred to as shaft torque.

The rotating shaft 2 of the gas turbine engine 1 is coupled by means of a coupling 25 to a shaft 21 of the electric generator 3. However, the two shafts 2, 21 may be regarded as a single shaft and will in the following be referred to as shaft 2, unless specific reference is made to the shaft 21 of the electric generator 3, the reason being that in case of normal operation (without a shaft failure) shafts 2, 21 rotate within the same rotational speed.

A problem occurs when mechanical damage occurs to the rotating shaft 2. Such damage may occur, e.g., by a fracture of the rotating shaft 2. When a fracture occurs, the gas turbine engine 1 abruptly lacks load, so that the rotational speed n of the gas turbine engine 1 increases sharply in a short time. This can lead to the destruction of parts of the gas turbine engine 1. More particularly, due to the high rotational speeds, blades may become radially detached from compressor stages and/or turbine stages of the gas turbine engine 1, which may lead to serious consequences if for example such turbo generator is used in an aircraft.

The turbo generator depicted in FIG. 1 is to be understood merely as an example. For example, other shaft arrangements are conceivable. For example, the rotating shaft 2 can be designed as a one-piece shaft or alternatively as a shaft with two or more parts. More particularly, it may be provided that the shaft 2 comprises a low-pressure shaft, a high-pressure shaft and, in some cases, also an intermediate pressure shaft. In case of a low-pressure shaft and a high-pressure shaft (and, in some cases, an intermediate pressure shaft), it is the low-pressure shaft that is driving the electric generator 3. Further, instead of a rectifier a frequency converter may be implemented that converts alternating current of one frequency to alternating current of another frequency. Generally, the electric generator 3 may be coupled to any kind of power electronics device.

Such a turbo generator can be used, for example, in hybrid-electric flight generators as a range extender, serving to charge batteries and/or directly drive the propulsion system.

**FIG. 2** illustrates the consequences of a shaft failure event such as a shaft break. A shaft failure event is identified as X. The upper diagram depicts the shaft torque $\tau$ over time t. Before the shaft failure event X, the torque is constant in section 41 of the curve. After the shaft failure event X, the torque decreases in section 42 of the curve until it reaches zero, section 43 of the curve.

The lower diagram depicts the shaft speed (its rotational speed) n over time. Before the shaft failure event X, the rotational speed is a constant in section 44 of the curve. After the shaft failure event X, the rotational speed develops differently for the turbine of the gas turbine engine and the electric generator, the reason being that the connection between the electric generator and the gas turbine engine is broken. The rotational speed of the turbine first increases in section 45 of the curve as the load is suddenly removed, reaches a maximum at point 46 and declines in section 47, the decline being caused by a shut-down of the fuel for the gas turbine engine as a result of detecting the shaft failure (wherein the shut-down of the fuel takes place already before the maximum at point 46 is reached). The rotational speed of the electric generator decreases in section 48 of the curve until reaching zero. The curves shown in FIG. 2 are schematic and the course of the curves does not necessarily have to be linear as shown in FIG. 2.

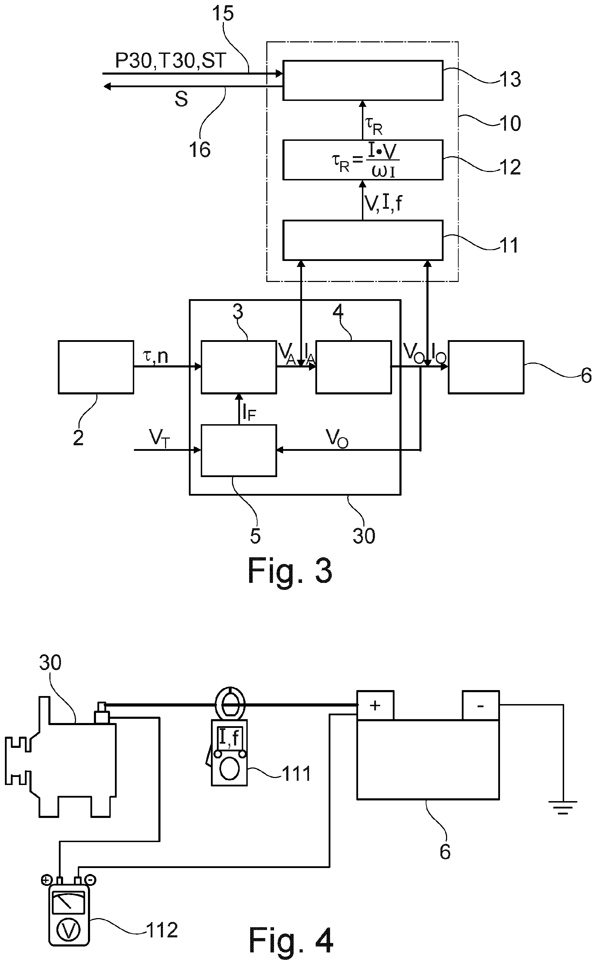

**FIG. 3** shows an embodiment of a shaft failure detection apparatus 10 in conjunction with an electric generating unit 30.

The electric generating unit 30 comprises an electric generator 3, a rectifier 4 and a voltage regulator 5. A shaft of the electric generator 3 is connected to a rotating shaft 2 of a gas turbine engine, as discussed with respect to FIG. 1, and inputs a torque τ while having a rotational speed n. The electric generator 3 outputs an alternating voltage and current $V_A$, $I_A$ that is input into the rectifier 4 which outputs a direct voltage and current $V_0$, $A_0$ which is input into a battery 6 for electric loading of the battery 6. The voltage regulator 5 receives the voltage output Vo by the rectifier 4, compares it with a target voltage $V_T$ and produces a control signal $I_F$ to regulate the voltage output Vo by the rectifier 4 to the target voltage $V_T$. The use and implementation of the voltage regulator 5 is optional and exemplary only.

The shaft failure detection apparatus 10 comprises measuring means 11, first determining means 12 and second determining means 13. The measuring means 11 are configured to measure at least one parameter of the electric generator 3 and/or of the rectifier 4. The measured parameter or parameters are such that they are suitable to identify the electric torque of the electric generator. In other words, the parameter or parameters are dependent on the shaft torque such that a change the shaft torque leads to a change in the parameters. The measured parameters may be the alternating voltage and current $V_A$, $I_A$ output by the electric generator and/or the direct voltage and current $V_0$, $A_0$ output by the rectifier 4. Further, by evaluating the frequency f of the alternating current, the rotational speed n of the shaft 2 can be determined. Knowing the number of poles P of the electric generator 3, the frequency f of the electric current is

$$f = n \cdot P / 120$$

wherein n is the rotational speed in rpm (wherein the frequency is in hertz (cycles per second).

In case of a shaft failure, the measured frequency f of the electric current indicates the rotational speed of the generator shaft which has been disconnected from the shaft of the gas turbine engine. Accordingly, the frequency f decreases after a shaft failure, in accordance with section 48 of FIG. 2.

FIG. 4 shows a simple example of how voltage V, current I and frequency f may be measured. To this end, the measuring means 11 include a voltmeter 112 and a current meter 111 which are connected between an output terminal of the electric generating unit 30 and an input terminal of the battery 6. The frequency can be measured by evaluating the change in current I over time (and/or by evaluating the change in voltage V over time).

The parameters U, I (meaning $V_A$, $I_A$ and/or $V_0$, $A_0$) and f measured by the measuring means 11 are input into the first determining means 12. The first determining means 12 are configured to calculate a value representative of the shaft torque using the formula:

$$\tau_R = (I \cdot V) / \omega_I$$

wherein:

$\tau_R$     is the value representative of the shaft torque;
I      is the value of the current;
V     is the value of the voltage; and
$\omega_I$     is the circular frequency $2\pi f$, when f is the frequency of the electric current.

If the alternating current $V_A$, $I_A$ is measured, the value of the root-mean-square value of $V_A$, $I_A$ may be considered (about 70,7 % of the peak amplitude).

It is pointed out that the calculated torque $\tau_R$ is a value representative of the shaft torque, wherein the shaft torque comprises an electrical torque, a magnetic losses torque and a mechanical losses torque. The magnetic losses torque and the mechanical losses torque can be considered to be constant. The calculated torque $\tau_R$ thus represents the electric torque. However, it is pointed out that the electric torque may have additional components (such as components dependent on $I^2$). However, this is not of relevance in the present context as, as will be discussed next, it is not the absolute values of the torque but a change in the torque that is evaluated for detecting a shaft failure. Such change is already reflected by the value $\tau_R$ representative of the shaft torque.

It is further pointed out that the above formula represents an example only. Other formulas based on parameters of the electric generator and/or of an associated power electronics device dependent on shaft torque may be used instead as long as they provide a value representative of the shaft torque.

The value $\tau_R$ representative of the shaft torque is input from the first determining means 12 to the second determining means 13. The second determining means 13 are configured to determine a shaft failure by evaluating a change in the value $\tau_R$ that is representative of the shaft torque. Such evaluation may include monitoring if the value $\tau_R$ stays within a predetermined boundary and/or monitoring if the value $\tau_R$ changes with a rate higher than a predetermined rate. For example, if the rate in the change of value $\tau_R$ is higher than -Y Nm/s, wherein "Y" can be any predetermined number, and wherein the negative sign "-" indicates that the change is negative (i.e., the value $\tau_R$ decreases), a shaft failure event may be determined.

In such case, the second determining means 13 send a command S on line 16 that triggers the shut off of the fuel supply to the gas turbine engine.

The calculation of the value $\tau_R$ over time may be smoothed/averaged to avoid spikes in the measurement that could trigger the threshold. Such averaging may be inherent in that the calculation cycles of a central processing unit (CPU) (such as 50 calculations per second) are averaged over a second.

The second determining means 13 may consider further parameters in deciding whether a shaft failure event has occurred or not. In particular, the second determining means 13 may receive through line 15 one or several parameters of the gas turbine engine. These parameters allow to double check the presence of a shaft failure by analyzing if these parameters or a change of these parameters is in logical consistency with a finding based on the evaluation of $\tau_R$ that a shaft failure has occurred.

The parameters input on line 15 include, in examples, the outlet pressure P30 of a high pressure compressor of the gas turbine engine, the outlet temperature T30 of a high-pressure compressor of the gas turbine engine, a fuel flow into a combustor of the gas turbine engine, the rotational speed of a high pressure spool (consisting of a high-pressure turbine, a high-pressure compressor and a high-pressure shaft), a turbine cooling air front temperature TCAF, a turbine cooling air rear temperature TCAR, and a twisting value ST of the rotating shaft 2. In this respect, it is pointed out that in case the parameters of the gas turbine engine additionally considered by the second determining means 13 regard a high-pressure spool of the gas turbine engine, in such case the rotating shaft of the gas turbine engine that is connected to the electric generator is a low pressure shaft of the gas turbine engine. The parameters P30, T30, TCAF, TCAR are well known to those skilled in the art.

According to one example, if the value $\tau_R$ changes with a rate that is higher than, e.g., 10,000 Nm/s, and if at the same time the pressure P30 is above a specific value such as 200 psi, such combination of values confirms the presence of a shaft failure event.

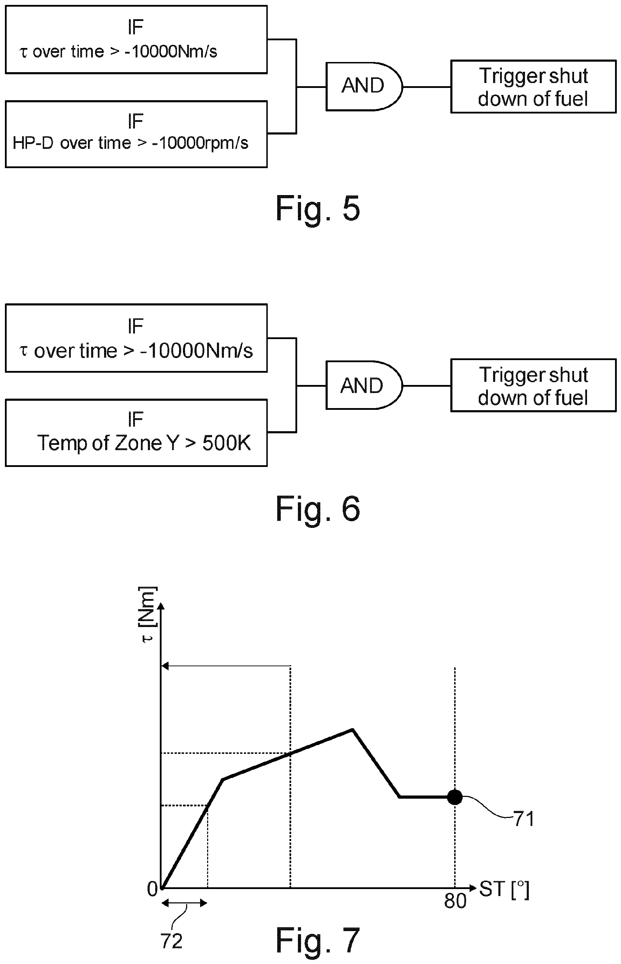

According to a further example that is illustrated in FIG. 5, if the value $\tau_R$ changes with a rate that is larger than, e.g., -10,000 Nm/s, and if at the same time the high-pressure spool experiences a deceleration HP-D, such as with a rate larger than -10,000 rpm/s, and if both conditions are present and input into a logical AND-gate, the logical AND-gate will output a signal that triggers the shut-down of the fuel supply. The two conditions are correlated as the high-pressure spool will decelerate at some point if the low-pressure shaft fails. In this embodiment, a rate of change of a parameter of the gas turbine engine is additionally considered.

According to a further example that is illustrated in FIG. 6, if the value $\tau_R$ changes with a rate that is higher than, e.g., 10,000 Nm/s, and if at the same time the temperature in a particular zone Y (such as the T30 temperature) is above a particular level such as 500 K, and if both conditions are present and input into a logical AND-gate, the logical AND-gate will output a signal that triggers the shut-down of the fuel supply. The two conditions are correlated as in case of a failure of the low-pressure shaft the temperature in particular zones of the gas turbine engine will rise. In this embodiment, the absolute value of a parameter of the gas turbine engine is additionally considered.

According to a further example that is illustrated in FIG. 7, a twist of the shaft is a further parameter of the gas turbine engine that can be additionally considered. A twist of the shaft is the physical response of the shaft to torque. Torque $\tau$ versus twist ST is shown in the graph of FIG. 7. If the twist ST becomes too large (80 degrees in FIG. 7), the shaft fails at 71. The normal working region is indicated as range 72. Understanding this there can be a threshold torque at which, if the measured torque is higher than the threshold torque, failure is destined to happen or there is an abnormal situation, like excessive fueling or a bearing failure that creates rotational resistance. On the other hand, after a shaft failure, the twist is zero. Evaluating the twist ST can be a further indication of a shaft failure and/or allows to provide for a warning signal that there is the danger of a shaft failure.

The measuring means 11, the first determining means 12 and the second determining means 13 are to be understood as functional parts of the shaft failure detection apparatus 10. They may be implemented, for example, using a nonvolatile computer-readable storage medium that stores instructions for operating the computer system, the instructions, when executed by one or more processors of the computer system, causing the one or more processors to perform operations in the computer system that perform the functions provided by said means. Further, it is pointed out that the means 11, 12 and 13 may be implemented together, e.g., by one software executed by one or more processors, or may be implemented individually.

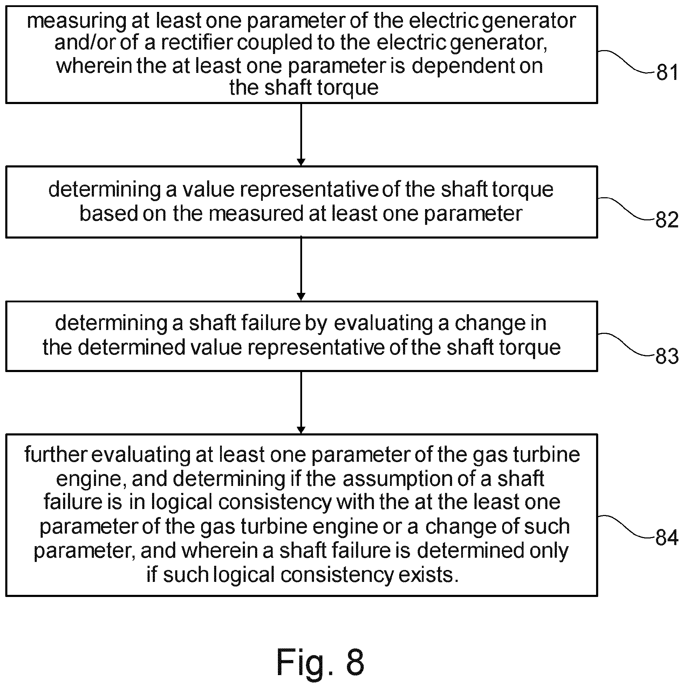

**FIG. 8** summarizes method steps of a method for determining a shaft failure of the rotating shaft of a gas turbine engine. In step 81, at least one parameter of the electric generator and/or of a rectifier coupled to the electric generator is measured. The at least one measured parameter is dependent on the shaft torque. In step 82, a value representative of the shaft torque is determined based on the measured at least one parameter. In step 83, a shaft failure is determined by evaluating a change in the determined value representative of the shaft torque.

Optionally, in step 84, additionally at least one parameter of the gas turbine engine is evaluated. It is determined if the assumption of a shaft failure is in logical consistency with the at least one parameter of the gas turbine engine or a change of such parameter. Such logical consistency may be a correlation or a lack of a correlation. To determine a logical consistency, changes in the respective parameters may be evaluated. A shaft failure is determined only if such logical consistency exists.

It should be understood that the above description is intended for illustrative purposes only, and is not intended to limit the scope of the present disclosure in any way. For example, the present invention is applicable to any electric generator connected to a rotating shaft, including a generator connected to the high-pressure shaft of a gas turbine engine used for flight propulsion and having a fan connected to the low-pressure shaft. Such generator may be the generator of an auxiliary gearbox of the gas turbine engine. Further, embodiments of the present invention may be implemented in other fields than aviation such as in naval applications.

Also, those skilled in the art will appreciate that other aspects of the disclosure can be obtained from a study of the drawings, the disclosure and the appended claims. All methods described herein can be performed in any suitable order unless otherwise indicated herein or otherwise clearly contradicted by context. Various features of the various embodiments disclosed herein can be combined in different combinations to create new embodiments within the scope of the present disclosure. In particular, the disclosure extends to and includes all combinations and sub-combinations of one or more features described herein. Any ranges given herein include any and all specific values within the range and any and all sub-ranges within the given range.

**Claims**

1. A shaft failure detection apparatus (10) for a rotating shaft (2) of a gas turbine engine (1), wherein the rotating shaft (2) transmits a torque ($\tau$) and has a rotational speed (n) and wherein an electric generator (3) is connected to the rotating shaft (2), the shaft failure detection apparatus (10) comprising:

   measuring means (11) configured to measure at least one parameter (U, I, f) of the electric generator (3) and/or of a power electronics device (4) coupled to the electric generator (3), wherein the at least one parameter (U, I, f) is dependent on the shaft torque;
   first determining means (12) configured to determine a value ($\tau_R$) representative of the shaft torque based on the measured at least one parameter (U, I, f); and
   second determining means (13) configured to determine a shaft failure, wherein the second determining means (13) evaluate a change in the value ($\tau_R$) representative of the shaft torque determined by the first determining means (12).

2. The shaft failure detection apparatus of claim 1, wherein the second determining means (13) determine a shaft failure if the value ($\tau_R$) representative of the shaft torque changes more than a predetermined threshold value.

3. The shaft failure detection apparatus of claim 1 or 2, wherein the second determining means (13) determine a shaft failure if the value ($\tau_R$) representative of the shaft torque changes with a rate higher than a predetermined rate.

4. The shaft failure detection apparatus of any preceding claim, wherein the measuring means (11) are configured to measure as parameter of the electric generator (3) and/or of the power electronics device (4) at least one of an electric current (I) of the electric generator (3) and/or of the power electronics device (4), a voltage (V) of the electric generator (3) and/or of the power electronics device (4), and a frequency (f) of the electric current (I).

5. The shaft failure detection apparatus of any preceding claim, wherein

   the measuring means (11) are configured to measure at least two parameters, wherein the at least two parameters comprise a voltage (V) output by the electric generator (3) and/or the power electronics device (4) and a current (I) output by the electric generator (3) and/or the power electronics device (4); and
   the first determining means (12) are configured to determine the value ($\tau_R$) representative of the shaft torque based on at least the measured voltage (V) and current (I).

6. The shaft failure detection apparatus of claim 5, wherein the measuring means (11) are configured to also measure the frequency (f) of the electric current (I), wherein the first determining means (12) are configured to determine the value ($\tau_R$) representative of the shaft torque also based on the frequency (f) of the electric current (I).

7. The shaft failure detection apparatus of claim 6, wherein the first determining means (12) are configured to determine the value ($\tau_R$) representative of the shaft torque by calculating

$$\tau_R = (I \cdot V) / \omega_I$$

wherein:

$\tau_R$ is the value representative of the shaft torque;

I is the value of the current;

V is the value of the voltage; and

$\omega_I$ is the circular frequency $2\pi f$, when f is the frequency of the electric current.

8. The shaft failure detection apparatus of any preceding claim, wherein the value ($\tau_R$) representative of the shaft torque is equal to the shaft torque ($\tau$), differs by a constant from the shaft torque ($\tau$) and/or differs by a factor from the shaft torque ($\tau$).

9. The shaft failure detection apparatus of any preceding claim, wherein the value ($\tau_R$) representative of the shaft torque represents an electrical torque of the electric generator (3).

10. The shaft failure detection apparatus of any preceding claim, the second determining means (13) are configured to determine a shaft failure by further evaluating at least one parameter (P30, T30, ST) of the gas turbine engine (1) and by determining if the assumption of a shaft failure is in logical consistency with the at the least one parameter (P30, T30, ST) of the gas turbine engine (1) or a change of such parameter, and the second determining means (13) are configured to determine a shaft failure only if such logical consistency exists.

11. The shaft failure detection apparatus of claim 10, wherein the second determining means (13) are configured to evaluate as parameter of the gas turbine engine (1) at least one of a compressor outlet pressure (P30), a compressor outlet temperature (T30), a turbine cooling air front temperature, a turbine cooling air rear temperature, a fuel flow into a combustor, the rotational speed of a high pressure spool, and a twisting (ST) of the rotating shaft (2).

12. The shaft failure detection apparatus of any preceding claim, wherein the second determining means (13) are configured to create a command (S) to shut off the fuel supply to the gas turbine engine (1) if the second determining means (13) detect a shaft failure.

13. A method of detecting a shaft failure of a rotating shaft (2) of a gas turbine engine (1), wherein the rotating shaft (2) transmits a torque ($\tau$) and has a rotational speed (n) and wherein an electric generator (3) is connected to the rotating shaft (2), the method comprising the steps of:

measuring (81) at least one parameter (U, I, f) of the electric generator (3) and/or of a power electronics device (4) coupled to the electric generator (3), wherein the at least one parameter (U, I, f) is dependent on the shaft torque; determining (82) a value ($\tau_R$) representative of the shaft torque based on the measured at least one parameter (U, I, f); and determining (83) a shaft failure by evaluating a change in the determined value ($\tau_R$) representative of the shaft torque.

14. The method of claim 13, wherein a shaft failure is determined if the value ($\tau_R$) representative of the shaft torque changes more than a predetermined threshold value and/or changes with a rate higher than a predetermined rate.

15. The method of claim 13 or 14, wherein:

at least two parameters are measured, wherein the at least two measured parameters comprise a voltage (V) output by the electric generator (3) and/or the power electronics device (4) and a current (I) output by the electric generator (3) and/or the power electronics device (4); and a value ($\tau_R$) representative of the shaft torque is determined based on at least the measured voltage (V) and current (I); and optionally further comprising evaluating (84) at least one parameter (P30, T30, ST) of the gas turbine engine (1), wherein it is determined if the assumption of a shaft failure is in logical consistency with the at the least one parameter (P30, T30, ST) of the gas turbine engine (1) or a change of such parameter, and wherein a shaft failure is determined only if such logical consistency exists.

Fig. 1

Fig. 2

Fig. 3

Fig. 4

IF
τ over time > -10000Nm/s

IF
HP-D over time > -10000rpm/s

AND

Trigger shut
down of fuel

Fig. 5

IF
τ over time > -10000Nm/s

IF
Temp of Zone Y > 500K

AND

Trigger shut
down of fuel

Fig. 6

Fig. 7

measuring at least one parameter of the electric generator and/or of a rectifier coupled to the electric generator, wherein the at least one parameter is dependent on the shaft torque ⎯81

determining a value representative of the shaft torque based on the measured at least one parameter ⎯82

determining a shaft failure by evaluating a change in the determined value representative of the shaft torque ⎯83

further evaluating at least one parameter of the gas turbine engine, and determining if the assumption of a shaft failure is in logical consistency with the at the least one parameter of the gas turbine engine or a change of such parameter, and wherein a shaft failure is determined only if such logical consistency exists. ⎯84

# Fig. 8

Europäisches
Patentamt

European
Patent Office

Office européen
des brevets

# EUROPEAN SEARCH REPORT

Application Number

EP 24 17 4745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2000 037057 A (MEIDENSHA ELECTRIC MFG CO LTD) 2 February 2000 (2000-02-02) * the whole document * | 1-15 | INV. F01D21/02 F01D21/00 |
| Y | US 11 619 139 B1 (BEAUCHESNE-MARTEL PHILIPPE [CA] ET AL) 4 April 2023 (2023-04-04) * column 2, line 25 - column 14, line 23; figures 1-13 * | 1-15 | |
| A | US 2013/098042 A1 (FREALLE JEAN-LUC CHARLES GILBERT [FR] ET AL) 25 April 2013 (2013-04-25) * the whole document * | 1-15 | |

TECHNICAL FIELDS
SEARCHED        (IPC)

F01D

The present search report has been drawn up for all claims

| Place of search | Date of completion of the search | Examiner |
|---|---|---|
| Munich | 5 August 2024 | Rau, Guido |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 464 874 A1**

## ANNEX TO THE EUROPEAN SEARCH REPORT
## ON EUROPEAN PATENT APPLICATION NO.

EP 24 17 4745

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2024

| Patent document cited in search report | | Publication date | Patent family member(s) | | Publication date |
|---|---|---|---|---|---|
| JP 2000037057 | A | 02-02-2000 | JP | 3899687 B2 | 28-03-2007 |
| | | | JP | 2000037057 A | 02-02-2000 |
| US 11619139 | B1 | 04-04-2023 | CA | 3187452 A1 | 04-08-2023 |
| | | | EP | 4223981 A1 | 09-08-2023 |
| | | | US | 11619139 B1 | 04-04-2023 |
| US 2013098042 | A1 | 25-04-2013 | CA | 2804089 A1 | 05-01-2012 |
| | | | CN | 102971495 A | 13-03-2013 |
| | | | EP | 2588718 A1 | 08-05-2013 |
| | | | ES | 2654348 T3 | 13-02-2018 |
| | | | FR | 2962165 A1 | 06-01-2012 |
| | | | JP | 2013530348 A | 25-07-2013 |
| | | | KR | 20130094285 A | 23-08-2013 |
| | | | PL | 2588718 T3 | 30-03-2018 |
| | | | RU | 2013101569 A | 10-08-2014 |
| | | | US | 2013098042 A1 | 25-04-2013 |
| | | | WO | 2012001334 A1 | 05-01-2012 |

EPO FORM P0459